**Europäisches Patentamt**

**European Patent Office**

**Office européen des brevets**

(19)

(11) Publication number : **0 502 005 B1**

## (12) EUROPEAN PATENT SPECIFICATION

(45) Date of publication of patent specification :
06.09.95 Bulletin 95/36

(51) Int. Cl.⁶ : **G02B 21/00**

(21) Application number : **90916789.2**

(22) Date of filing : **20.11.90**

(86) International application number :
**PCT/GB90/01785**

(87) International publication number :
**WO 91/07682 30.05.91 Gazette 91/12**

(54) **PHASE MEASURING SCANNING OPTICAL MICROSCOPE.**

(30) Priority : **22.11.89 GB 8926435**

(43) Date of publication of application :
**09.09.92 Bulletin 92/37**

(45) Publication of the grant of the patent :
**06.09.95 Bulletin 95/36**

(84) Designated Contracting States :
**AT BE CH DE DK ES FR GB GR IT LI LU NL SE**

(56) References cited :
EP-A- 0 307 029
J. OPT. SOC. AM. A, vol. 4, no. 1, January 1987,
Optical Society of America ; R.A. GONSALVES
: "Phase retrieval by differential intensity
measurements", pages 166-170.
OPTICA ACTA, vol. 28, no. 6, 1981, Crown
Copyright ; J.G. WALKER : "The phase ret-
rieval problem. A solution based on zero loca-
tion by exponential apodization", pages
735-738.

(73) Proprietor : **The Secretary of State for Defence
in Her Britannic Majesty's Government of the
United Kingdom of Great Britain and
Northern Ireland
Whitehall
London SW1A 2HB (GB)**

(72) Inventor : **WALKER, John, Graham
16 Copse Road
Haslemere Surrey GU27 3QH (GB)**
Inventor : **PIKE, Edward, Roy
8 Bredon Grove
Malvern Worcestershire KE0 06 (GB)**

(74) Representative : **Beckham, Robert William et al
Defence Research Agency
Intellectual Property Department
DRA Farnborough
Farnborough, Hants. GU14 6TD (GB)**

## Description

This invention concerns phase measurement in transmission and reflection scanning optical microscopes.

One known scanning optical microscope is a Scanning Confocal Microscope (SCM) described in Sheppard and Choudhury, Optica Acta,24,1051, 1977; and Brakenhoff, J.of Microscopy,117,219, 1979.

In this SCM a parallel beam of laser light is focused by an illuminating lens onto a small portion of an object. Light from this small portion is imaged by an image lens via a pinhole located in the focal plane onto a single detector. The pinhole and the centre of the illumination beam are aligned to be confocal. The image is built up by scanning the object and recording the output from the detector for each object position.

In the form described above this microscope measures only the amplitude or modulus of the complex amplitude of the light passing through the pinhole onto the detector. That is, the phase of the image is not measured. To achieve this some form of interferometer must be incorporated into the microscope such that a reference beam also falls onto the detector. This presents practical difficulties.

Similarly for the enhanced resolution transmission or reflection scanning optical microscope (described in the co-pending patent application GB 89,13129, PCT/GB90/00868 publication no. WO-A-90/15352) the microscope measures only the amplitude of the enhanced resolution complex image and some form of interferometer must be incorporated to measure the enhanced phase image.

Phase measurement in electron microscopes is known from GB 2095028. This uses an apodising filter of a form approximating to $exp(-2\pi at)$. Two sets of measurements are made one with and the other without the filter located in a $(t,s)$ plane.

The present invention allows both the amplitude and the phase image to be obtained from a SCM or an enhanced resolution scanning microscope without the necessity of employing a reference beam.

According to this invention the phase image is recovered by subsequent processing of two or more amplitude images. One image is measured in the usual way; the other or others are recorded with suitable filters placed in the Fourier or output planes of both the illumination and imaging lenses. The terms light and optical are herein defined to include wavelengths either side of the visible wavelengths; the limits being determined by the availability of suitable light sources and detectors. The light source may be a laser, or bright light and pinhole.

According to this invention a scanning confocal microscope includes:-
an illuminating lens system for focusing light to illuminate a small portion of an object,

an imaging lens system for receiving light, which may be transmitted or reflected, from the small portion of the object and directing such received light through a pinhole aperture onto a detector or detectors,

means for scanning the object relative to the focused light,

means for storing the output of the detector or detectors to provide a display or displays of the scanned object,

characterised by:-

two movable optical filters having amplitude weighting functions $g(x,y)$ and arranged to be positioned in the Fourier planes of the illuminating and imaging lens systems to modify the measured amplitude image, and

means for computing the phase image from detector data consisting of an amplitude image of the object measured without the filters in place and one or more amplitude images recorded with the filters in position in the Fourier planes.

Such filters have an optical transmission or filter function $g(x,y)$. Preferably the form of the filter function is $g(x,y) = c.exp(ax + by)$, where $a,b$ and $c$ are real constants; $a$ and $b$ are chosen according to the size of the lens Fourier plane and $c$ is chosen to keep the filter function less than unity. In this example the filter has an amplitude weighting to incident light. This may be achieved by a variable density of photographic emulsion on the surface of a glass plate or by a plate of absorbing material of variable thickness.

The form of the filter does not depend on the shape of the lens aperture nor on the aberrations of the lenses.

The microscope may include an optical processing element to enhance the resolution.

The microscope may operate on light transmitted through or reflected off a scanned object. In the latter case the illuminating and imaging lens system may be one and the same.

The invention will now be described, by way of example only, with reference to the accompanying drawings in which:-

Figure 1 is a diagrammatic representation of a transmission scanning microscope,

Figure 2 is an exploded view of part of Figure 1,

Figure 3 is a diagrammatic representation of a reflection scanning microscope,

Figure 4 is a diagrammatic representation of an enhanced resolution transmission scanning microscope,

Figure 5 is a diagrammatic representation of an enhanced resolution reflection scanning microscope,

Figure 6 is a flow chart of the computational steps of one of a number of different iterative or other methods that could be used to retrieve the phase information,

Figure 7 are graphs showing a measure of intensity as detected and after iteration shown in Figure 6 and

Figure 8 is a graph showing a comparison of calculated and known phase values.

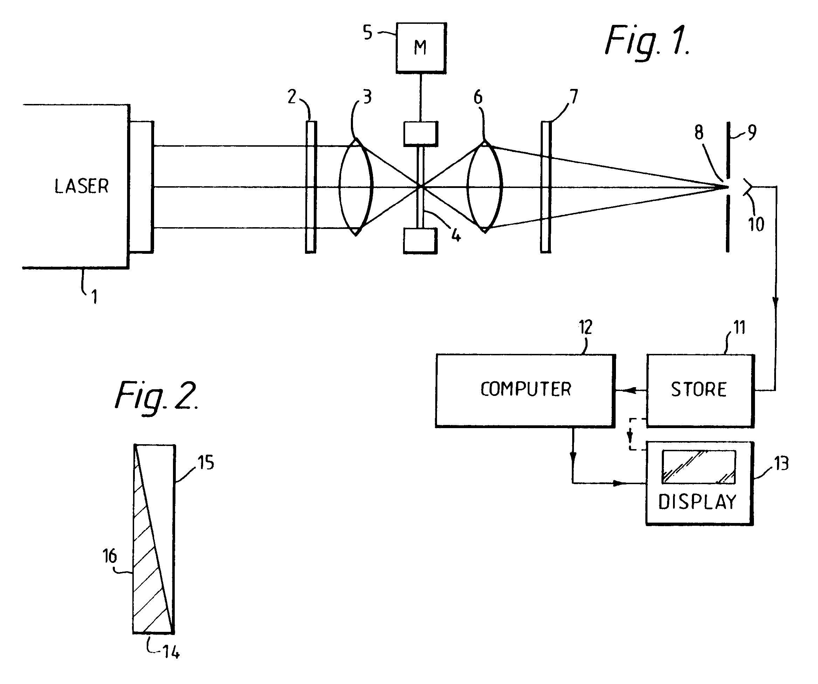

The microscope of Figure 1 comprises a laser 1 whose parallel light output is directed through a first filter 2 onto an illuminating lens 3 of typically x100 magnification. The laser 1 may be HeCd laser operating at a wavelength of .325μm. The filter 2 is positioned so as to be in the lens Fourier plane ie. such that the complex amplitude in the object plane is the Fourier Transform of the filter function. Additional lens or lenses (not shown) may be used to achieve this. An object 4 to be measured is arranged at the focus of the illuminating lens 3 i.e., the object plane, and is mounted for movement across the optical axis of the microscope by a motor and drive 5. This allows scanning in an x-direction; a second motor and drive (not shown) orthogonal to the first motor allows scanning in the y-direction. Using a third motor and drive (not shown) images may be acquired at different positions in the z direction for 3-dimensional objects. An image lens 6 is arranged to receive light from the object and focus it through a second filter 7 onto a pinhole aperture 8 in a stop plate 9. The size of the pinhole is typically less than the size of the image of a point object formed in this plane. Light passing through the pinhole is measured by a detector 10 such as a photo-diode detector. Output from the detector 10 is to a store 11 including a storage medium such as a magnetic disc for subsequent output to a digital computer 12. The computer is used to implement an algorithm to retrieve the phase image from two or more amplitude images for subsequent display on a television monitor 13. Both object and image lenses 2, 6 have the same numerical aperture $N$, typically about 1.2 or more.

Apart from the filters 2,7 and the computer 12 this is similar to conventional scanning confocal microscopes (SCM). With such microscopes the amplitude image is sent directly from the store for display.

The purpose of the filters 2,7 is to multiply the illuminating and imaging Fourier planes by a filter or weighting function to enable the phase image to be recovered by subsequent processing. The preferable filter function $g(x,y)$ is $c.exp(ax + by)$, where $a$ and $b$ are of the order of $1/D$, where $D$ is the diameter of the lens Fourier planes and $c$ is chosen to keep $g(x,y)$ less than unity. In one typical example $D = 2mm, a = 0.5mm^{-1}, b = 0$ and $c = 0.7$.

It can be shown, as detailed later, that the optical filters 2,7 are amplitude weighted. An amplitude weighting filter or element may be produced on glass as follows. A layer of photographic emulsion is deposited on the glass and exposed to light from an optical beam writer using a grey level scale to encode an exponential transmission amplitude after development. Alternatively as shown in Figure 2 a plate 16 of absorbing material of linearly varying thickness may be produced as follows. The plate 16 of absorbing material is cut and polished with a linearly varying thickness. The absorption coefficient and rate of variation of thickness will affect the constants $a$ and $b$ in the form of $g(x,y)$. To remove the phase distortion introduced by such a plate 16 another plate 15 with negligible absorption but the same refractive index is similarly cut and polished. Then the two plates 15,16 are glued together with an index matching cement to form a single parallel sided element 14. Alternatively the linearly varying absorbing material may be produced by electro-optic means such as a switched field across a liquid crytal wedge.

In operation an object to be scanned is prepared as usual. This involves placing on a slide and thinning to the required thickness, eg. $20 to 100 \mu m$. The slide is then mounted in the object plane as shown and raster scanned across the optical path as the detector measures the amplitude of light received from each illuminated spot (pixel) on the object. The store records each pixel information for subsequent processing. The slide may be raster scanned by indexing in typical steps of $\lambda/4$ or be translated uniformly a line at a time. Two or more images are recorded. One image is recorded with the filters 2,7 removed or replaced with clear glass plates of the same optical path as the filters so as not to change the focus of the microscope. One image is recorded with the filters 2,7 in place; both filters should have the same values of the constants $a$ and $b$. Additional images recorded with different sets of filters or with the same filters inserted at different angles may also be recorded. Typically the filters would be rotated in 90 degree steps. Additional images may facilitate the subsequent processing to recover the phase image. After recording the images are sent to the computer for processing to retrieve the phase image. An algorithm suitable for retrieving the phase image from data of this sort is described later.

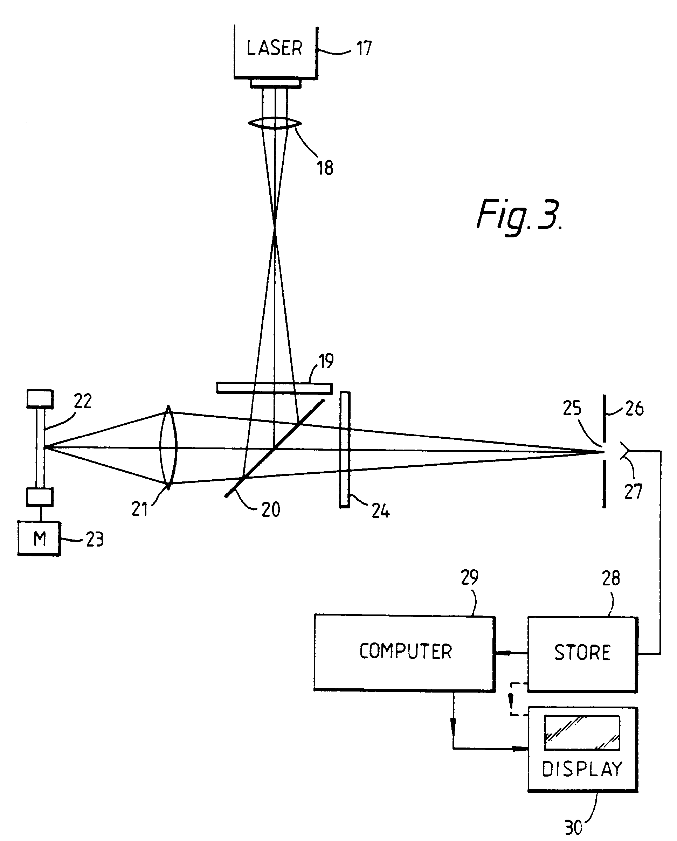

The microscope shown in Figure 3 is similar to that of Figure 1 but operates on light reflected from an object 22. A laser 17 has its output directed via a beam expanding lens 18 and a filter 19 onto a reflecting beam splitter 20. From this beam splitter 20 light is focused by an image lens 21 onto the object 22. As before the object 22 is movable for scanning by a motor 23. Light reflected off the object 22 is collected by the image lens 21 arranged to receive light from the object and focus it through the beamsplitter 20 and a second filter 24 onto a pinhole aperture 25 in a stop plate 26. Light passing through the pinhole is measured by a detector 27 such as a photo-diode detector. Output from the detector 27 is to a store 28 including a storage medium such as a magnetic disc for subsequent output to a digital computer 29. The computer is used to implement an algorithm to retrieve the phase image from two or more intensity or amplitude images for subsequent display on a television monitor 30. Apart from the filters 19,24 and the computer 29 this is similar to conventional reflection scanning confocal microscopes (SCM). With such microscopes the intensity or amplitude image is sent directly from the store for display. Operation is as described for Figure 1.

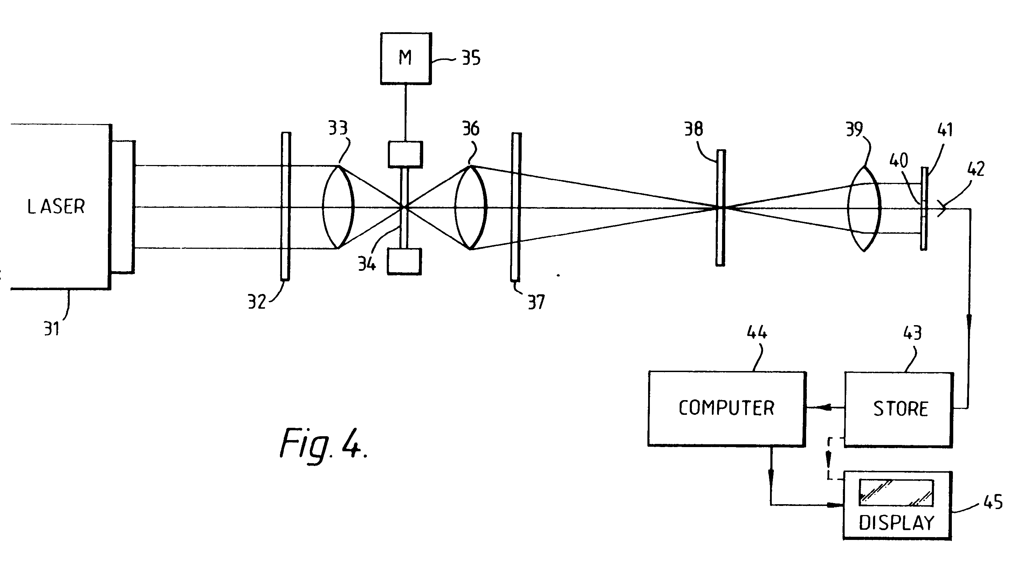

The microscope shown in Figure 4 is similar to that of Figure 1 but contains an optical processing element 38 and additional lens 39 to enhance the resolution of the images obtained. The purpose of the optical processing plate 38 is to multiply the image plane by a predetermined function to improve the resolution obtained. Such an optical processing element 38 has an optical weighting function $m(x,y)$. For example, for a transmission or reflection microscope with square apertures and ideal lenses preferably the weighting function $m(x,y)$ is equal to $cos(2\pi Nx/\lambda).cos(2\pi Ny/\lambda)$ where $N$ is the numerical aperture of the first and second lens systems and $\lambda$ is wavelength. Alternatively a simple phase weighting function of constant amplitude but with the same phase as the above cosine function may be used ie.

$$m(x,y) = sign(cos(2\pi Nx/\lambda)).sign(cos(2\pi Ny/\lambda)).$$

The element has both a phase and amplitude weighting to incident light. The phase weighting may be achieved by etching grooves in the surface of a glass plate, whilst the amplitude weighting may be a variable density of photographic emulsion on the surface of a second glass plate. Both glass plates may be aligned and fixed together to form the optical processing element. Alternatively computer generated holographic plates may be used to achieve the same effect. For systems having a circular pupil the optical element has circular symmetry to the weighting function eg. the weighting appears as a set of concentric rings.

For other shaped apertures (e.g. circular) and non-ideal lenses the preferable weighting function may be calculated e.g., by the techniques of singular systems analysis (Optica Acta, 1984, Vol.31, No.8, pp923-946). The microscope may operate on light transmitted through, reflected off or fluorescing from a scanned object.

The phase and amplitude weighting may be achieved by a composite plate. A glass phase plate is shaped on one surface into a rectangular grating having a pitch of twice the Rayleigh distance in the image plane which for an object lens of x100 is about $50\mu m$; and a depth of $\lambda/2(n-1)$ where $\lambda$ is wavelength and $n$ is the refractive index of the glass plate.

One way of producing a phase weighting on the plate is to use an optical beam writer under computer control to produce a square (Ronchi) grating of 1:1 ratio in photoresist on the glass plate. After development of the photoresist to produce a mask the glass is etched to a depth of $\lambda/2(n-1)$ and the remaining photoresist removed.

An amplitude weighting element may be produced on glass as follows. A layer of photographic emulsion is deposited on the glass and exposed to light from an optical beam writer using a grey level scale to encode a sinusoidal transmission amplitude after development. The frequency of the amplitude grating is twice that of the phase weighting on the phase element.

After both phase and amplitude elements have been formed they are placed with the gratings in contact in a parallel laser beam and their relative positions adjusted until two equal bright first order diffraction spots emerge and are then glued along their edges using an ultraviolet curing optical cement to form a single element.

The amplitude, or intensity, measuring version of this, Figure 4, enhanced resolution scanning microscope is described in the co-pending patent application GB 89,13129, PCT/GB90/00868. A laser 31 has its parallel output directed through a first filter 32. The light is then focussed by an illuminating lens 33 onto an object 34. As before the object is movable for scanning by a motor 35. Light transmitted through the object 34 is collected by an imaging lens 36 and focussed through a second filter 37 onto the optical element 38 arranged at the image plane of the lens 36. From this element light is focussed by a further lens 39 onto a pinhole aperture 40 in a stop plate 41 and measured by a detector 42 such as a photo-diode. Output from the detector 42 is to a store 43 including a storage medium such as a magnetic disc for subsequent output to a digital computer 44. The computer is used to implement an algorithm to retrieve the phase image from two or more amplitude images for subsequent display on a television monitor 45. Both object and image lenses 33,36 have the same numerical aperture $N$, typically about 1.2 or more. Apart from the filters 32,37 and the computer 44 this is similar to the amplitude measuring enhanced resolution scanning confocal microscope described in the co-pending patent application GB 89,13129, PCT/GB90/00868. With such microscopes the amplitude image is sent directly from the store for display. Operation is as described for Figure 1.

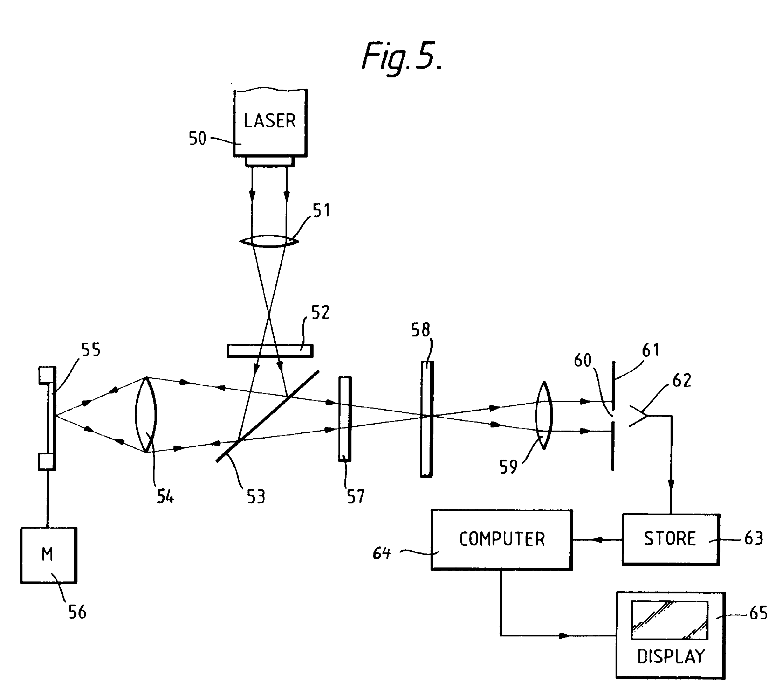

In a similar way the filters and computer may also be incorporated in the reflection enhanced resolution scanning confocal microscope described in the co-pending application GB 89,13129, PCT/GB90/00868. The microscope shown in Figure 5 is similar to that of Figure 4 but operates on light reflected from an object 55. The amplitude, or intensity, measuring version of this, Figure 5, enhanced resolution scanning microscope is described in the copending patent application GB 89,13129, PCT/GB90/00868. A laser 50 has its output directed via an object lens 51 and a first filter 52 onto a reflecting beam splitter 53. From this beam splitter 53 light is focussed by an image lens 54 onto the object 55. As before the object 55 is movable for scanning by a motor 56. Light reflected off the object 55 is focussed by the image lens 54 through the beamsplitter 53 and a second filter 57 onto an optical processing element 58 for processing as in Figure 4. Processed light is focussed by an additional lens 59 through a pinhole aperture 60 in a stop plate 61 and onto a detector 62. Output from the detector 62 is to a store 63 for subsequent output to a digital computer 64. The computer 64 is used to implement an algorithm to retrieve the phase image for display on a television monitor 65. The filters 52 and 57 are as described for Figure 4 and are in similar optical positions. Operation is as described for Figure 4.

The theoretical basis for the phase retrieving ability of this invention is as follows:- to simplify the notation, this analysis is presented in one spatial dimension; extension to the two dimensional case is straightforward. The theory presented first relates to the case of coherent illumination illustrated in Figure 1. When in the course of scanning the object is centred at position $-\Delta x$, in the object plane 4, the complex amplitude in the plane immediately behind the object, $a(x,\Delta x)$, is given by,

$$a(x,\Delta x) = o(x + \Delta x)J_1(x), \quad 1$$

where $o(x)$ is the object form and $J_1(x)$ is the form of the amplitude in the object plane 4 due to the illuminating lens 3 and filter 2 if in position. The complex amplitude at position $x$ in the image plane immediately in front of the plate 9 with the object at position $-\Delta x$, denoted by $i(x, \Delta x)$, is given, neglecting magnification, by the application of the coherent imaging equation to (1),

$$i(x,\Delta x) = \int a(-x',\Delta x)J_2(x - x')dx' \quad 2$$

$$i(x,\Delta x) = \int o(-x' + \Delta x)J_1(-x')J_2(x - x')dx' \quad 3$$

where $J_2(x)$ is the amplitude point spread function associated with the image lens 6 and the filter 7 if in position. The amplitude falling on the detector $S(\Delta x)$ is only that part of the amplitude at the centre of the image given by $i(0,\Delta x)$, hence,

$$S(\Delta x) = i(0,\Delta x) = \int o(-x' + \Delta x)J_1(-x')J_2(-x')dx' \quad 4$$

$$= o(x) \otimes J_1(-x).J_2(-x) \quad 5$$

where $\otimes$ denotes convolution. With the filters removed $J_1 = J_o$ the amplitude point spread function of the illuminating lens 3 and $J_2 = J_i$ the amplitude point spread function of the imaging lens 6, in which case,

$$S(\Delta x) = o(x) \otimes J_o(-x).J_i(-x) \quad 6$$

With the filters in position $J_1(x) = J_0(x) \otimes G_1(x)$, where $G_1(x)$ is the amplitude diffraction pattern (Fourier Tansform) formed in the object plane 4 of the filter 2 and $J_2(x) = J_i(x) \otimes G_2(x)$, where $G_2(x)$ is the amplitude diffraction pattern (Fourier Tansform) formed in the image plane 9 of the filter 7, in which case, the modified amplitude falling on the detector ,$S'(\Delta x)$, is given by,

$$S'(\Delta x) = o(x) \otimes [(J_o(-x) \otimes G_1(-x)).(J_i(-x) \otimes G_2(-x))]. \quad 7$$

For the case where both filters are of equal exponential form ie. $G_1(x) = G_2(x) = G(x)$ and where $G(x)$

is the Fourier transform of the filter function $g(x) = c.exp(ax)$; then using the special property of $G(x)$ that for any functions $A(x)$ and $B(x)$,

$$A(x) \otimes G(x).B(x) \otimes G(x) = (A(x).B(x)) \otimes G(x) \quad 8$$

equation (7) may be expressed in the form,

$$S'(\Delta x) = [o(x) \otimes (J_o(-x).J_i(-x))] \otimes G(-x). \quad 9$$

Noting the form of equation (6) it may be seen that,

$$S'(\Delta x) = S(x) \otimes G(-x). \quad 10$$

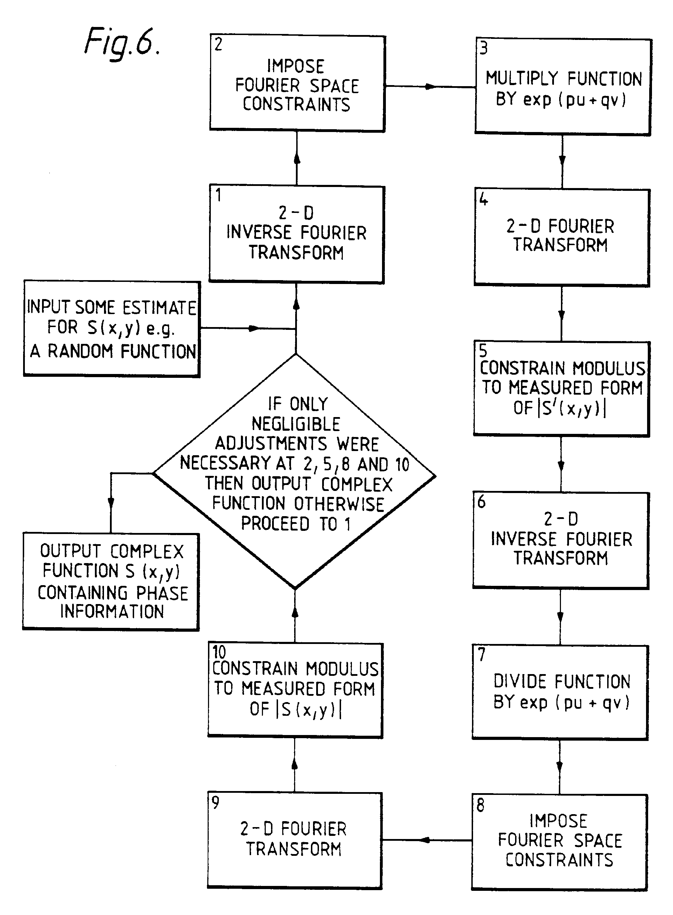

It may be shown (Opt. Acta. Vol 28, page 735, 1981) that measurements of the squared moduli (intensities) of two functions such as $|S(\Delta x)|^2$ and $|S'(\Delta x)|^2$ which are related by equation (10) are sufficient to determine the phase of $S(\Delta x)$. Figure 6 shows a flow chart of the computational steps of one of a number of different iterative or other methods that could be used to retrieve the phase of $S(\Delta x)$ from measurements of the two intensities $|S(\Delta x)|^2$ and $|S'(\Delta x)|^2$.

In this iterative method an initial estimate for the form of the image complex amplitude $S(x)$ is made and the iteration proceeds by alternately constraining the solution to be compatible with both the measured intensities $|S(\Delta x)|^2$ and $|S'(\Delta x)|^2$ and to be compatible with the known extent of the transfer function of the imaging system. The first stage is to input some estimate for the image complex amplitude, this may be a random function. This estimate is then transformed by an inverse 2-D Fourier Transform (FT) to give the complex amplitude in Fourier space. Next the known constraints in this space are applied; these are that the Transform should be zero beyond the spatial frequency cut-off determined by the numerical apertures of the lenses 3 and 6 and the wavelength of the light. The constained function is then multiplied by an exponential function $exp(pu + qv)$ to simulate the effect of the filters 2 and 7, where $u$ and $v$ are the Fourier space variables and the values of $p$ and $q$ are determined by the constants a and b associated with the filters 2 and 7 and by the focal length of the lenses 3 and 6 and the wavelength of the light used. The resulting function is transformed by a 2-D FT to give an estimate of the complex form of the function $S'(x)$. Next the known constraints in this space are applied; these are that the modulus of the function is known from the data recorded with the filters 2 and 7 in place. This involves the modulus of the function being changed to the measured form but the phase of the function being left unaltered. This estimate is then transformed by an inverse 2-D FT and divided by an exponential function to compensate for the effect of the filters 2 and 7 to again give an estimate for the complex amplitude in Fourier space. Next the known constraints in this space of the extent of the function are again applied. Next the resulting function is transformed by a 2-D FT to give an estimate of the complex form of the function $S(x)$. Next the known constraints in this space are applied; these are that the modulus of the function is known from the data recorded without the filters in place. This involves the modulus of the function being changed to the measured form but the phase of the function being left unaltered. This sequence of operations is continued untill a complex function $S(x)$ is found which is compatible with both the sets of recorded data and with the known Fourier space constraints. This occurs when only negligible adjustments are necessary to make the function compatible with the constraints. At this point the iteration is considered to have converged and the complex form of $S(x)$ containing the desired phase information may be output.

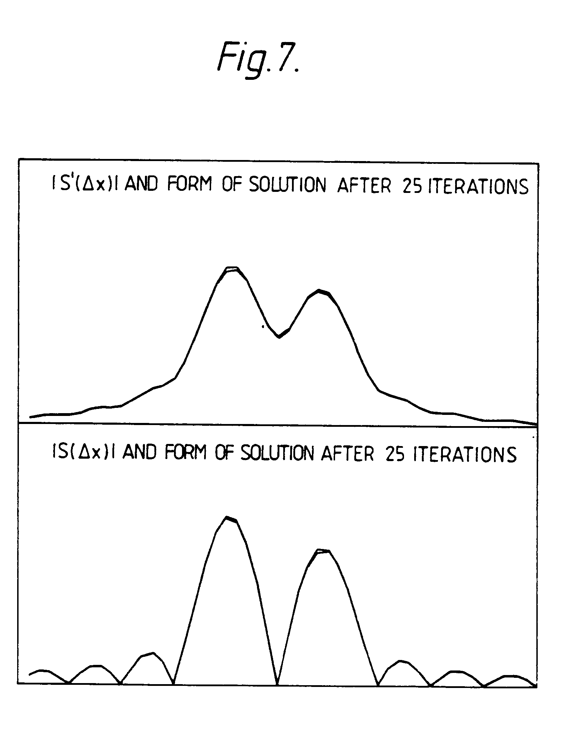

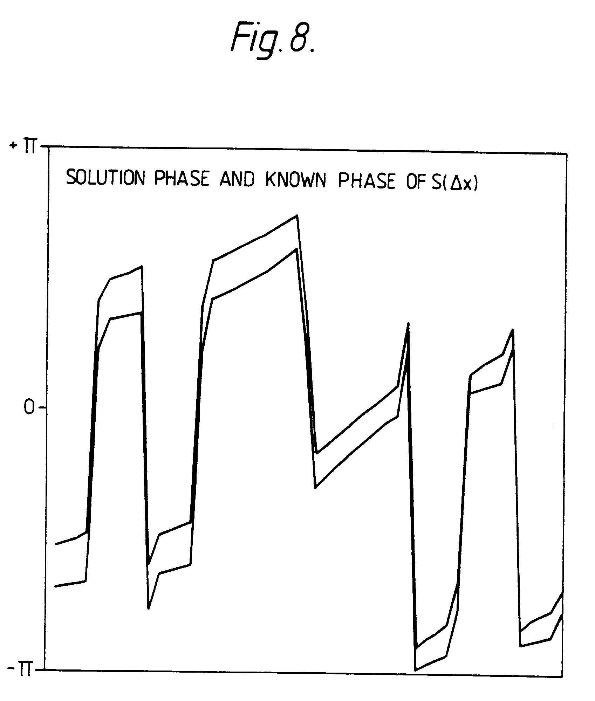

As an example, the form of $|S(\Delta x)|$ and $|S'(\Delta x)|$ are shown in Figure 7 for the case of a computer simulated object consisiting of two spikes of amplitude 1 and 0.8 and with a phase difference of 2 radians. Also shown are the forms of the iterative solution after 25 iterations. The small difference between the forms of $|S(\Delta x)|$ and the modulus of the solution and between $|S'(\Delta x)|$ and the modulus of the modified solution indicates that the solution has converged. The closeness of the two moduli of the solution to the forms of $|S(\Delta x)|$ and $|S'(\Delta x)|$ depends on the noise level in the two data sets. The phase of the solution is shown in Figure 8 together with the known phase of $S(\Delta x)$. There is a good agreement between the forms of the two phases. The constant phase difference, which arises because constant phase terms have no influence on the measured intensity images, is of no practical importance.

The theory presented now relates to the case of an enhanced resolution transmission microscope and coherent illumination illustrated in Figure 4. When in the course of scanning the object is centred at position $-\Delta x$, in the object plane 34, the complex amplitude in the plane immediately behind the object, $a(x,\Delta x)$, is given by,

$$a(x,\Delta x) = o(x + \Delta x).J_1(x). \quad 11$$

where $o(x)$ is the object form and $J_1(x)$ is the form of the amplitude in the object plane 34 due to the lens 33 and the filter 32 if in position. The complex amplitude at position $x$ in the image plane immediately in front of the element 38 with the object at position $-\Delta x$, denoted by $i(x,\Delta x)$, is given, neglecting magnification, by the application of the coherent imaging equation to (11),

$$i(x,\Delta x) = \int a(-x',\Delta x).J_2(x - x')dx'$$
$$i(x,\Delta x) = \int o(-x' + \Delta x).J_1(-x').J_2(x - x')dx' \quad 12$$

where $J_2(x)$ is the amplitude point spread function associated with the image lens 36 and the filter 37 if in position. The amplitude immediately behind the element 38 is given by the product of $i(x, \Delta x)$ and the effective complex amplitude transmittance of the element $m(x)$. The lens 39 and the pinhole 40 are arranged such that the lens forms the Fourier transform of the amplitude leaving the element 38 and the pinhole is at the centre of this transform. The effect of this arrangement is to sum or integrate (by taking the DC term from the Fourier transform) the complex amplitude of the light leaving the element 38. Thus the complex amplitude at the detector 42, $S_m(\Delta x)$, is given by,

$$S_m(\Delta x) = \int i(x,\Delta x).m(x)dx. \quad 13$$

Substituting equation (12) into (13) gives the following expression for the amplitude at the detector when the object is centred at position $-\Delta x$,

$$S_m(\Delta x) = \int\int o(-x' + \Delta x).J_1(-x').J_2(x - x').m(x)dx'dx. \quad 14$$

Using the symbol $\otimes$ to denote convolution the form of the amplitude at the detector may be expressed as,

$$S_m(x) = o(x) \otimes [J_1(-x).(J_2(-x) \otimes m(x))]. \quad 15$$

With the filters removed $J_1 = J_o$ the amplitude point spread function of the illuminating lens 33 and $J_2 = J_i$ the amplitude point spread function of the imaging lens 36, in which case,

$$S_m(\Delta x) = o(x) \otimes [J_o(-x).(J_i(-x) \otimes m(x))] \quad 16$$

With the filters in position $J_1(x) = J_0(x) \otimes G_1(x)$, where $G_1(x)$ is the amplitude diffraction pattern (Fourier Tansform) formed in the object plane 34 of the filter 32 and $J_2(x) = J_i(x) \otimes G_2(x)$, where $G_2(x)$ is the amplitude diffraction pattern (Fourier Tansform) formed in the element plane 38 of the filter 37, in which case, the modified amplitude falling on the detector $,S'_m(\Delta x)$, is given by,

$$S'_m(\Delta x) = o(x) \otimes [(J_o(-x) \otimes G_1(-x)).((J_i(-x) \otimes G_2(-x)) \otimes m(x))]. \quad 17$$

For the case where both filters are of equal exponential form ie. $G_1(x) = G_2(x) = G(x)$ and where $G(x)$ is the Fourier transform of the filter function $g(x) = c.exp(ax)$; then using the special property of G(x) given above in equation (8), equation (7) may be expressed in the form,

$$S'_m(\Delta x) = [o(x) \otimes (J_o(-x).(J_i(-x) \otimes m(x)))] \otimes G(-x). \quad 18$$

Noting the form of equation (6) it may be seen that,

$$S'_m(\Delta x) = S_m(x) \otimes G(-x). \quad 19$$

As before it may be shown (Opt. Acta. Vol 28, page 735, 1981) that measurements of the squared moduli (intensities) of two functions such as $|S_m(\Delta x)|^2$ and $|S'_m(\Delta x)|^2$ which are related by equation (19) are sufficient to determine the phase of $S_m(\Delta x)$. Again, the computational steps shown in Figure 6 are of one of a number of different iterative or other methods that could be used to retrieve the phase of $S_m(\Delta x)$ from measurements of the two intensities $|S_m(\Delta x)|^2$ and $|S'_m(\Delta x)|^2$.

## Claims

1. A scanning confocal microscope including:-
   an illuminating lens system (3, 21, 33) for focusing light to illuminate a small portion of an object (4, 22, 34),

an imaging lens system (6, 21, 36) for receiving light, which may be transmitted or reflected, from the small portion of the object and directing such received light through a pinhole aperture (8, 25, 40) onto a detector or detectors (10, 27, 42),

means (5, 23, 35) for scanning the object relative to the focused light,

means (11, 28, 43) for storing the output of the detector or detectors to provide a display (13, 30, 45) of the scanned object,

characterised by:-

two movable optical filters (2, 7, 19, 24, 32, 37) having amplitude weighting functions $g(x,y)$ and arranged to be positioned in the Fourier planes of the illuminating and imaging lens systems (3, 6, 21, 33, 36) to modify the measured amplitude image, and

means (12, 29, 44) for computing the phase image from detector data consisting of an amplitude image of the object measured without the filters (2, 7, 19, 24, 32, 37) in place and one or more amplitude images recorded with the filters (2, 7, 19, 24, 32, 37) in position in the Fourier planes.

2. The microscope of claim 1 and further including an optical processing plate (38) and lens (39) for multiplying the image plane by a predetermined function to improve the resolution obtained at the detector.

3. The microscope of claim 1 or claim 2 wherein the optical filters (2, 7, 19, 24, 32, 37) have a filter function of the form $g(x,y) = c.exp(ax + by)$, where $a,b$ and $c$ are real constants.

4. The microscope of claim 1 wherein at least one of the optical filters (2, 7, 19, 24, 32, 37, 52, 57) is a plate of transparent material supporting a layer of variable transparency material.

5. The microscope of claim 4 wherein the layer of variable transparency material is a layer of variable density photographic emulsion.

6. The microscope of claim 1 wherein at least one of the optical filters (2, 7, 19, 24, 32, 37, 52, 57) is a plate of optically absorbing material of varying thickness bonded to an inversely shaped plate of negligible absorption but similar refractive index to the absorbing material, the two plates forming a composite filter of constant phase retardation over all the composite filter.

7. The microscope of claim 6 wherein the composite filter has a uniform thickness and is formed of two plates of linearly varying thickness.

## Patentansprüche

1. Konfokal-Abtastmikroskop mit

einem Beleuchtungs-Linsensystem (3, 21, 33) für die Lichtfokussierung zur Beleuchtung eines kleinen Bereichs eines Objekts (4, 22, 34),

einem Abbildungs-Linsensystem (6, 21, 36) zur Aufnahme des von dem kleinen Bereich des Objekts durchgelassenen oder reflektierten Lichts und zur Führung eines derart aufgenommenen Lichts durch eine Lochblende (8, 25, 40) auf einen Detektor oder Detektoren (10, 27, 42),

einer Einrichtung (5, 23, 35) zur Abtastung des Objekts relativ zum fokussierten Licht,

einer Einrichtung (11, 28, 43) zur Speicherung der Ausgangsinformation des Detektors oder der Detektoren zur Erzeugung einer Darstellung (13, 30, 45) des abgetasteten Objekts,

gekennzeichnet durch

zwei bewegliche optische Filter (2, 7, 19, 24, 32, 37), die Amplituden-Wichtungsfunktionen g(x, y) aufweisen und in den Fourierebenen des Beleuchtungs- und Abbildungs-Linsensystems (3, 6, 33, 36) zur Modifizierung des gemessenen Amplitudenbildes angeordnet sind, und

eine Einrichtung (12, 29, 44) zur Berechnung des Phasenbildes aus den Detektordaten, das aus einem ohne Filter (2, 7, 19, 24, 32, 37) gemessenen Amplitudenbild des Objekts und einem oder mehrerer Amplitudenbilder besteht, die mit den in den Fourierebenen angeordneten Filtern (2, 7, 19, 24, 32, 37) aufgenommen wurden.

2. Mikroskop nach Anspruch 1, das ferner eine optische Verarbeitungsplatte (38) und eine Linse (39) für die Vervielfachung der Bildebene durch eine vorbestimmte Funktion zur Verbesserung der am Detektor erreichten Auslösung aufweist.

3. Mikroskop nach Anspruch 1 oder 2, bei dem die optischen Filter (2, 7, 19, 24, 32, 37) eine Filterfunktion der Form g(x, y) = c·exp(ax + by) aufweisen, wobei a, b und c reelle Konstanten sind.

4. Mikroskop nach Anspruch 1, bei dem wenigstens einer der optischen Filter (2, 7, 19, 24, 32, 37, 52, 57) eine Platte aus transparentem Material ist, die eine Schicht aus veränderlichem Transparenzmaterial trägt.

5. Mikroskop nach Anspruch 4, bei dem die Schicht aus variablem Transparenzmaterial eine Schicht aus einer Photoemulsion mit veränderlicher Dichte ist.

6. Mikroskop nach Anspruch 1, bei dem wenigstens einer der optischen Filter (2, 7, 19, 24, 32, 37, 52, 57) eine Platte aus optischem Absorptionsmaterial veränderlicher Dicke ist, die mit einer entgegengesetzt geformten Platte mit vernachlässigbarer Absorption aber einem dem Absorptionsmaterial ähnlichen Brechungsindex verbunden ist, wobei die beiden Platten einen Verbundfilter mit konstanter Phasenverzögerung über dem gesamten Verbundfilter bilden.

7. Mikroskop nach Anspruch 6, bei dem der Verbundfilter eine gleichmäßige Dicke aufweist und aus zwei Platten mit linear veränderlicher Dicke gebildet ist.

## Revendications

1. Microscope homofocal à balayage, comprenant :
   un système d'éclairement (3, 21, 33) à lentille destiné à focaliser la lumière pour l'éclairement d'une petite partie d'un objet (4, 22, 34),
   un système (6, 21, 36) de formation d'image à lentille destiné à recevoir la lumière qui peut être transmise ou réfléchie par la petite partie de l'objet et à diriger la lumière reçue par un orifice en trou d'épingle (8, 25 40) sur un ou plusieurs détecteurs (10, 27, 42),
   un dispositif (5, 23, 35) de balayage de l'objet par la lumière focalisée, et
   un dispositif (11, 28, 43) de mémorisation du signal de sortie du détecteur ou des détecteurs pour la formation d'un affichage (13, 30, 45) de l'objet balayé,
   caractérisé par
   deux filtres optiques mobiles (2, 7, 29, 24, 32, 37) ayant des fonctions de pondération $g(x,y)$ et destinés à être placés dans les plans de Fourier des systèmes (3, 6, 21, 33, 36) d'éclairement et de formation d'image à lentille pour la modification de l'image d'amplitude mesurée, et
   un dispositif (12, 29, 44) de calcul de l'image de phase d'après des données de détecteur constituées d'une image d'amplitude de l'objet mesurée en l'absence des filtres (2, 7, 19, 24, 32, 37) en position et d'une ou plusieurs images d'amplitude enregistrées avec les filtres (2, 7, 19, 24, 32, 37) en position dans les plans de Fourier.

2. Microscope selon la revendication 1, comprenant en outre une lame (38) de traitement optique et une lentille (39) destinée à multiplier le plan image par une fonction prédéterminée afin que la résolution obtenue au niveau du détecteur soit accrue.

3. Microscope selon la revendication 1 ou 2, dans lequel les filtres optiques (2, 7, 19, 24, 32, 37) ont une fonction de filtrage de da forme $g(x,y) = c.exp(ax + by)$, a, b et c étant des constantes réelles.

4. Microscope selon la revendication 1, dans lequel l'un au moins des filtres optiques (2, 7, 19, 24, 32, 37, 52, 57) est une lame d'une matière transparente supportant une couche d'une matière dont la transparence est variable.

5. Microscope selon la revendication 4, dans lequel la couche d'une matière dont la transparence est variable est une couche d'une émulsion photographique de densité variable.

6. Microscope selon la revendication 1, dans lequel l'un au moins des filtres optiques (2, 7, 19, 24, 32, 37, 52, 57) est une lame d'une matière optiquement absorbante d'épaisseur variable collée à une lame de configuration inverse et présentant une absorption négligeable mais ayant un indice de réfraction analogue à celui de la matière absorbante, les deux lames formant un filtre composite présentant un retard constant de phase sur tout le filtre composite.

7. Microscope selon la revendication 6, dans lequel le filtre composite a une épaisseur uniforme et est formé de deux lames dont l'épaisseur varie linéairement.

Fig. 1.

Fig. 2.

EP 0 502 005 B1

Fig.3.

LASER

M — 35

33
36
38
39
40
41
42

32
34
37

31
11

EP 0 502 005 B1

44
43

COMPUTER ← STORE

*Fig. 4.*

45
DISPLAY

Fig. 5.

*Fig.6.*

**2** — IMPOSE FOURIER SPACE CONSTRAINTS

**3** — MULTIPLY FUNCTION BY exp (pu + qv)

**1** — 2-D INVERSE FOURIER TRANSFORM

**4** — 2-D FOURIER TRANSFORM

INPUT SOME ESTIMATE FOR S(x,y) e.g. A RANDOM FUNCTION

**5** — CONSTRAIN MODULUS TO MEASURED FORM OF $|S'(x,y)|$

IF ONLY NEGLIGIBLE ADJUSTMENTS WERE NECESSARY AT 2, 5, 8 AND 10 THEN OUTPUT COMPLEX FUNCTION OTHERWISE PROCEED TO 1

**6** — 2-D INVERSE FOURIER TRANSFORM

OUTPUT COMPLEX FUNCTION S (x,y) CONTAINING PHASE INFORMATION

**10** — CONSTRAIN MODULUS TO MEASURED FORM OF $|S(x,y)|$

**7** — DIVIDE FUNCTION BY exp (pu + qv)

**9** — 2-D FOURIER TRANSFORM

**8** — IMPOSE FOURIER SPACE CONSTRAINTS

# Fig.7.

IS'(Δx)I AND FORM OF SOLUTION AFTER 25 ITERATIONS

IS(Δx)I AND FORM OF SOLUTION AFTER 25 ITERATIONS

## Fig. 8.

SOLUTION PHASE AND KNOWN PHASE OF S(Δx)